# EUROPEAN PATENT SPECIFICATION

(11) **EP 3 775 533 B1**
(45) Date of publication and mention of the grant of the patent: **23.04.2025**
(21) Application number: 19716684.6
(22) Date of filing: 26.03.2019
(51) Int. Cl.: F03D 1/06, B33Y 10/00, B33Y 80/00, B29C 64/00, B29C 65/48, B29C 65/78, B29C 65/00, B29C 70/84, B29D 99/00, B29K 105/12, B29L 31/08

(54) **METHODS FOR JOINING BLADE COMPONENTS OF ROTOR BLADES USING PRINTED GRID STRUCTURES**
VERFAHREN ZUM VERBINDEN VON SCHAUFELKOMPONENTEN VON ROTORBLÄTTERN UNTER VERWENDUNG VON GEDRUCKTEN GITTERSTRUKTUREN
PROCÉDÉS DE JONCTION DE COMPOSANTS DE PALE DE PALES DE ROTOR AU MOYEN DE STRUCTURES DE GRILLE IMPRIMÉES

(30) Priority: 26.03.2018 US 201815935304
(43) Date of publication of application: 17.02.2021
(73) Proprietor: General Electric Renovables España, S.L., 08005 Barcelona (ES)
(72) Inventor: ROBERTS, David, 1019 HE Amsterdam (NL); ALTHOFF, Nicholas, K., La Crosse, Wisconsin 54603 (US); NIELSEN, Michael, Wenani, 6640 Lunderskov (DK); TOBIN, James, Robert, Greenville, South Carolina 29615 (US); MCCALIP, Andrew, Houston, Texas 77056 (US)
(74) Representative: COPA Copenhagen Patents
(86) International application number: PCT/US2019/024006
(87) International publication number: WO 2019/191046

(56) References cited:
- EP-A1- 3 050 651
- WO-A1-2017/220740
- WO-A2-2019/103830
- US-A- 4 474 536
- US-A1- 2009 155 084
- US-A1- 2013 108 455
- US-A1- 2014 301 856
- US-A1- 2015 139 810
- US-A1- 2017 058 862
- US-A1- 2017 145 990
- US-A1- 2017 204 833

## Description

### FIELD

The present disclosure relates in general to wind turbine rotor blades, and more particularly to methods for joining blade components of rotor blades using printed grid structures.

### BACKGROUND

Wind power is considered one of the cleanest, most environmentally friendly energy sources presently available, and wind turbines have gained increased attention in this regard. A modern wind turbine typically includes a tower, a generator, a gearbox, a nacelle, and one or more rotor blades. The rotor blades capture kinetic energy of wind using known foil principles. The rotor blades transmit the kinetic energy in the form of rotational energy so as to turn a shaft coupling the rotor blades to a gearbox, or if a gearbox is not used, directly to the generator. The generator then converts the mechanical energy to electrical energy that may be deployed to a utility grid.

The rotor blades generally include a suction side shell and a pressure side shell typically formed using molding processes that are bonded together at bond lines along the leading and trailing edges of the blade. Further, the pressure and suction shells are relatively lightweight and have structural properties (e.g., stiffness, buckling resistance and strength) which are not configured to withstand the bending moments and other loads exerted on the rotor blade during operation. Thus, to increase the stiffness, buckling resistance and strength of the rotor blade, the body shell is typically reinforced using one or more structural components (e.g. opposing spar caps with a shear web configured therebetween) that engage the inner pressure and suction side surfaces of the shell halves.

In addition, conventional rotor blades require a substantial amount of bond paste to provide structure at various blade joints (e.g. at the leading or trailing edges of the rotor blade) to prevent local buckling of the suction and pressure side shells. Due to the complex geometry near these joint areas, it is often difficult to provide this structure in other ways that would be lighter than bond paste. Thus, conventional rotor blades typically utilize excess paste for the structure needed at the joints. Such excess paste, however, is expensive, heavy, and can limit the types of adhesives that can be used. For example, heavy and thick adhesive sections containing fast curing adhesives with high exothermic reactions can generate excess heat and damage the surrounding materials, thereby creating safety hazards.

In view of the foregoing, the art is continually seeking improved methods for joining blade components of rotor blades that use less adhesives.

US 2017/204833 A1 discloses a method of manufacturing a rotor blade for a wind turbine. The method includes providing a blade mold of the rotor blade, placing an outer skin layer in the blade mold, placing one or more structural inserts in the blade mold atop the outer skin layer as a function of a load of the rotor blade and placing an inner skin layer atop the one or more structural inserts and securing the outer skin layer, the one or more structural inserts, and the inner skin layer together to form the rotor blade.

US 2009/155084 A1 discloses method and system for assembling large wind turbine blades that includes providing a plurality of wind turbine blade segments. An adhesive distribution arrangement is disposed on a surface of at least one of the plurality of the wind turbine blade segments. The adhesive distribution arrangement includes a bonding grid having a plurality of adhesive distribution openings. The wind turbine blade segments are directed together and sufficient adhesive is provided to the bonding grid to substantially fill an area between the wind turbine segments. The adhesive is then cured to form a bonded joint, the bonding grid being incorporated into the bonded joint. A bonding grid for use with the method and system and a segmented wind turbine blade are also disclosed.

US 4 474 536 A1 discloses a hollow wind turbine blades and the like comprising abutting blade sections, with nose forming strips and converging walls forming a tail section connecting with the ends of the nose forming strips, and a method of fabricating them comprising machining the facial end walls of the abutting blade sections to provide a precise alignment thereof providing a flush joint when the sections are butted together, adhesively bonding the blade sections in abutting relation and permitting the bond to cure, cutting communicating splice receiving slots in the abutting nose forming strips, and inserting adhesively bonding splice inserts which fit the slots in place in the slot.

US 2017/145990 A1 discloses a wind turbine blade with a trailing edge including a radially inboard portion and a radially outboard portion opposite the radially inboard portion. The trailing edge further includes at least one serrated portion extending at least partially between the radially inboard portion and the radially outboard portion. The serrated portion includes at least one substantially acoustically absorbent material.

EP 3 050 651 A1 discloses a method of manufacturing a lead edge protective sheath for an airfoil component. The method includes generating a digital model of a lead edge protective sheath for an airfoil component, inputting the digital model into an additive manufacturing machine, and printing, with one or more selected materials, a lead edge protective sheath for an airfoil component based on the digital model.

Other examples of the prior art for a joint area of a rotor blade of a wind turbine and a method for joining a first blade component and a second blade component of a rotor blade are described in US 2013/0108455 and WO 2017/220740.

### BRIEF DESCRIPTION

Aspects and advantages of the invention will be set forth in part in the following description, or may be obvious from the description, or may be learned through practice of the invention.

In one aspect as defined in claim 1, the present disclosure is directed to a method for joining a first blade component and a second blade component of a rotor blade together. The method includes printing and depositing, via a computer numeric control (CNC) device, at least one three-dimensional (3-D) grid structure at a first joint area of the rotor blade. The first joint area contains the first blade component interfacing with the second blade component. The method also includes providing an adhesive at the first joint area and contacting at least a portion of the grid structure. Further, the method includes securing the first blade component and the second blade component together at the first joint area via the adhesive.

In one embodiment, the adhesive may at least partially fill the grid structure. In another embodiment, the first and second blade components may include first and second outer surfaces of the rotor blade, a shear web, and/or a spar cap. Thus, in one embodiment, the method may include placing the first outer surface into a mold of the rotor blade, printing and depositing, via the CNC device, the grid structure(s) onto an inner surface of the first outer surface at the first joint area, wherein the grid structure bonds to the first outer surface as the grid structure is being deposited, placing the second outer surface atop the first outer surface, and securing the first and second outer surfaces together via the adhesive.

According to the invention, the first joint area includes a spar cap/shear web connection, a spar cap/blade shell connection, and/or a blade shell/blade shell connection. More specifically, in certain embodiments, the blade shell/blade shell connection includes a trailing edge and/or a leading edge of the rotor blade.

According to the invention, the method includes printing and depositing, via the CNC device, a first grid structure onto the inner surface of the first outer surface at the first joint area and a second grid structure onto the inner surface of the first outer surface at a different, second joint area. In such embodiments, the method also includes printing and depositing, via the CNC device, the first grid structure onto the inner surface of the first outer surface and spaced apart from the trailing edge of the rotor blade to provide a first gap. In addition, the method further includes printing and depositing, via the CNC device, the second grid structure onto the inner surface of the first outer surface and spaced apart from the leading edge of the rotor blade to provide a second gap.

According to the invention, the method includes filling, at least in part, at least one of the first gap or the second gap with the adhesive. In addition to the adhesive, in certain embodiments, the method may also include forming at least a portion of the grid structure of a foaming agent.

In still further embodiments, the method may include selectively applying cooling air to the grid structure during printing and depositing. In yet another embodiment, the method may also include printing and depositing, via the CNC device, one or more alignment structures into the at least one grid structure.

In additional embodiments, the grid structure(s) may contact the inner surface of the first outer surface and an inner surface of the second outer surface. Thus, in certain embodiments, the grid structure(s) may include a tapered chord-wise cross-section.

In another aspect according to claim 9, the present disclosure is directed to a joint area of a rotor blade of a wind turbine. The joint area includes a first blade component, a second blade component interfacing with the first blade component at a joint, at least one three-dimensional (3-D) grid structure positioned between the first and second blade components adjacent to the joint, and an adhesive provided between the grid structure and the first and second blade components.

In one embodiment, the first and second blade components of the joint area may include first and second outer surfaces of the rotor blade, a shear web, or a spar cap. In another embodiment, the grid structure(s) may be formed, at least in part, via additive manufacturing. Alternatively, or in addition, the grid structure(s) may be formed, at least in part, of a pre-fabricated honeycomb material. It should be understood that the joint area may further include any of the additional features as described herein.

In yet another non-claimed aspect, the present disclosure is directed to a method for securing a blade add-on component to a rotor blade. The method includes printing and depositing, via a computer numeric control (CNC) device, at least one three-dimensional (3-D) grid structure to form the blade add-on component. The method also includes placing the blade add-on component onto or within the rotor blade. Further, the method includes providing an adhesive to at least partially fill the grid structure. Moreover, the method includes securing the blade add-on component to the rotor blade via the adhesive.

In one embodiment, the blade add-on component may correspond to a reinforcement structure for a leading edge or a trailing edge, a flatback airfoil corner, or a tip extension. It should be understood that the method may further include any of the additional features and/or steps as described herein.

These and other features, aspects and advantages of the present invention will become better understood with reference to the following description and appended claims. The accompanying drawings, which are incorporated in and constitute a part of this specification, illustrate embodiments of the invention and, together with the description, serve to explain the principles of the invention.

### BRIEF DESCRIPTION OF THE DRAWINGS

A full and enabling disclosure of the present invention, including the best mode thereof, directed to one of ordinary skill in the art, is set forth in the specification, which makes reference to the appended figures, in which:
FIG. 1 illustrates a perspective view of one embodiment of a wind turbine according to the present disclosure;
FIG. 2 illustrates a perspective view of one embodiment of a rotor blade of a wind turbine according to the present disclosure;
FIG. 3 illustrates an exploded view of the modular rotor blade of FIG. 2;
FIG. 4 illustrates a cross-sectional view of one embodiment of a leading edge segment of a modular rotor blade according to the present disclosure;
FIG. 5 illustrates a cross-sectional view of one embodiment of a trailing edge segment of a modular rotor blade according to the present disclosure;
FIG. 6 illustrates a cross-sectional view of the modular rotor blade of FIG. 2 according to the present disclosure;
FIG. 7 illustrates a cross-sectional view of the modular rotor blade of FIG. 2 according to the present disclosure;
FIG. 8 illustrates a side, perspective view of one embodiment of a mold of a rotor blade placed within a bed of a three-dimensional printer, particularly illustrating an outer skin surface placed in the mold according to the present disclosure;
FIG. 9 illustrates a side, perspective view of one embodiment of a mold of a rotor blade placed within a bed of a three-dimensional printer, particularly illustrating an outer skin surface placed in the mold with a plurality of grid structures printed thereto according to the present disclosure;
FIG. 10 illustrates a cross-sectional view of one embodiment of a rotor blade having a plurality of grid structures printed at different joint areas of the rotor blade according to the present disclosure;
FIG. 11 illustrates a detailed, cross-sectional view of the rotor blade of FIG. 10 at the trailing edge joint;
FIG. 12 illustrates a detailed, cross-sectional view of the rotor blade of FIG. 10 at the leading edge joint;
FIG. 13 illustrates a detailed, cross-sectional view of one embodiment of trailing edge joint area of a rotor blade containing a printed grid structure according to the present disclosure;
FIG. 14 illustrates a detailed, cross-sectional view of another embodiment of trailing edge joint area of a rotor blade containing a printed grid structure according to the present disclosure; and
FIG. 15 illustrates a flow diagram of one embodiment of a method for securing a blade add-on component to a rotor blade according to the present disclosure.

### DETAILED DESCRIPTION

Reference now will be made in detail to embodiments of the invention, one or more examples of which are illustrated in the drawings. Each example is provided by way of explanation of the invention, not limitation of the invention. In fact, it will be apparent to those skilled in the art that various modifications and variations can be made in the present invention without departing from the scope of the invention. For instance, features illustrated or described as part of one embodiment can be used with another embodiment to yield a still further embodiment. Thus, it is intended that the present invention covers such modifications and variations as come within the scope of the appended claims.

Generally, the present disclosure is directed to methods for manufacturing grid structures for wind turbine rotor blades using automated deposition of materials via technologies such as 3-D Printing, additive manufacturing, automated fiber deposition, as well as other techniques that utilize CNC control and multiple degrees of freedom to deposit material. As such, the grid structures of the present disclosure are useful for reinforcing a joint area of the rotor blade (i.e. by providing buckling resistance at the joint area). More specifically, the printed structures described herein may contain one or more gaps and may be shaped to fill the space between two laminate surfaces that require bonding. The tight gaps within the printed structure allow for a significantly reduced amount of adhesive to be used and allow the adhesive to flow between the gaps of the printed structure upon closing. Thus, the adhesive flow between the gaps and the reduced amount of adhesive needed substantially reduces the hydraulic pressure needed to close the joint. In addition, the adhesive can form a mechanical lock when cured into the structure to increase bonding strength and reliability compared to an adhesive-only bond. As such, joints of the present disclosure provide a net weight savings as the bulk of the printed structure gaps remains unfilled after closing of the joint.

In addition, the grid structures described herein allow for faster curing adhesives to be used and reduce the overall process cycle time and weight. Moreover, the grid structures of the present disclosure allow for non-destructive testing (NDT) inspection, as the joint areas no longer require foam. Further, the grid structures of the present disclosure can be directly printed to thermoplastic fiberglass skins, thereby providing a more ideal bonding surface. The printed structures of the present disclosure may also simultaneously be used to align components during the bonding process and can be used to fill difficult gaps, such as the space created when using flat pultrusions in spar caps against a curved airfoil surface.

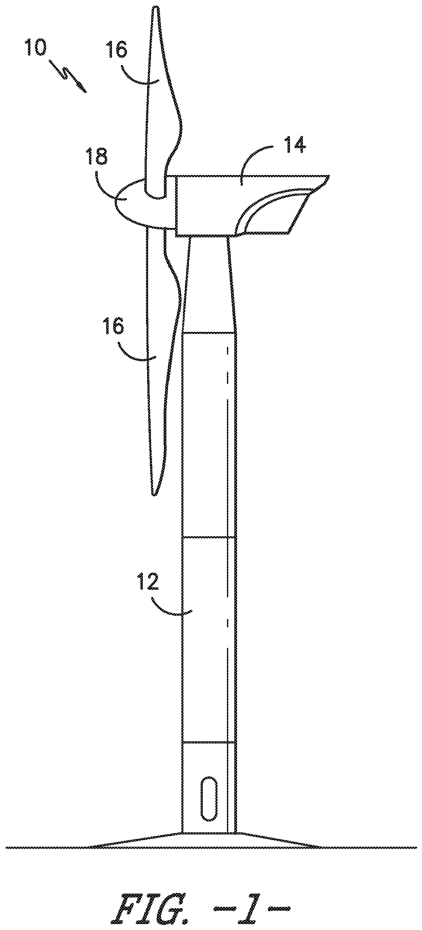

Referring now to the drawings, FIG. 1 illustrates one embodiment of a wind turbine 10 according to the present disclosure. As shown, the wind turbine 10 includes a tower 12 with a nacelle 14 mounted thereon. A plurality of rotor blades 16 are mounted to a rotor hub 18, which is in turn connected to a main flange that turns a main rotor shaft. The wind turbine power generation and control components are housed within the nacelle 14. The view of FIG. 1 is provided for illustrative purposes only to place the present invention in an exemplary field of use. It should be appreciated that the invention is not limited to any particular type of wind turbine configuration. In addition, the present invention is not limited to use with wind turbines, but may be utilized in any application having rotor blades. Further, the methods described herein may also apply to manufacturing any similar structure that benefits from printing a structure directly to skins within a mold before the skins have cooled so as to take advantage of the heat from the skins to provide adequate bonding between the printed structure and the skins. As such, the need for additional adhesive or additional curing is eliminated.

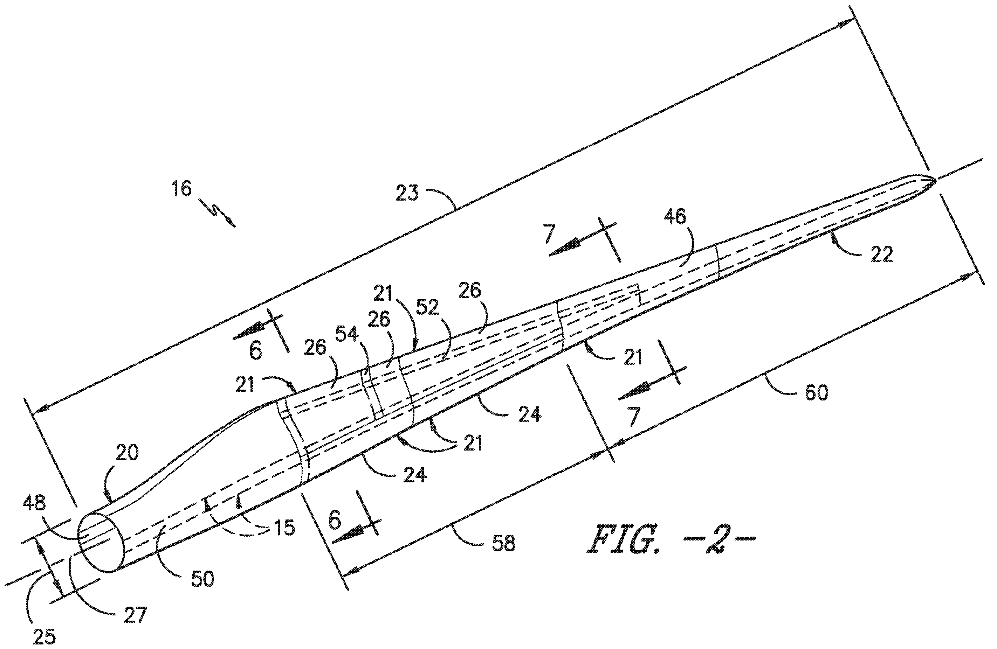

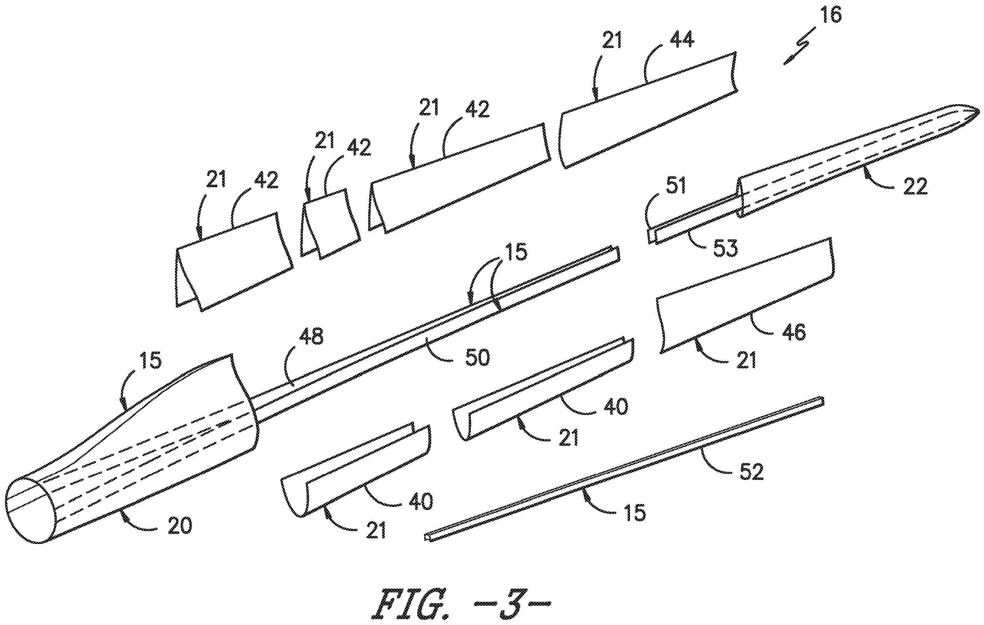

Referring now to FIGS. 2 and 3, various views of a rotor blade 16 according to the present disclosure are illustrated. As shown, the illustrated rotor blade 16 has a segmented or modular configuration. It should also be understood that the rotor blade 16 may include any other suitable configuration now known or later developed in the art. As shown, the modular rotor blade 16 includes a main blade structure 15 constructed, at least in part, from a thermoset and/or a thermoplastic material and at least one blade segment 21 configured with the main blade structure 15. More specifically, as shown, the rotor blade 16 includes a plurality of blade segments 21. The blade segment(s) 21 may also be constructed, at least in part, from a thermoset and/or a thermoplastic material.

The thermoplastic rotor blade components and/or materials as described herein generally encompass a plastic material or polymer that is reversible in nature. For example, thermoplastic materials typically become pliable or moldable when heated to a certain temperature and returns to a more rigid state upon cooling. Further, thermoplastic materials may include amorphous thermoplastic materials and/or semi-crystalline thermoplastic materials. For example, some amorphous thermoplastic materials may generally include, but are not limited to, styrenes, vinyls, cellulosics, polyesters, acrylics, polysulphones, and/or imides. More specifically, exemplary amorphous thermoplastic materials may include polystyrene, acrylonitrile butadiene styrene (ABS), polymethyl methacrylate (PMMA), glycolised polyethylene terephthalate (PET-G), polycarbonate, polyvinyl acetate, amorphous polyamide, polyvinyl chlorides (PVC), polyvinylidene chloride, polyurethane, or any other suitable amorphous thermoplastic material. In addition, exemplary semi-crystalline thermoplastic materials may generally include, but are not limited to polyolefins, polyamides, fluropolymer, ethyl-methyl acrylate, polyesters, polycarbonates, and/or acetals. More specifically, exemplary semi-crystalline thermoplastic materials may include polybutylene terephthalate (PBT), polyethylene terephthalate (PET), polypropylene, polyphenyl sulfide, polyethylene, polyamide (nylon), polyetherketone, or any other suitable semi-crystalline thermoplastic material.

Further, the thermoset components and/or materials as described herein generally encompass a plastic material or polymer that is non-reversible in nature. For example, thermoset materials, once cured, cannot be easily remolded or returned to a liquid state. As such, after initial forming, thermoset materials are generally resistant to heat, corrosion, and/or creep. Example thermoset materials may generally include, but are not limited to, some polyesters, some polyurethanes, esters, epoxies, or any other suitable thermoset material.

In addition, as mentioned, the thermoplastic and/or the thermoset material as described herein may optionally be reinforced with a fiber material, including but not limited to glass fibers, carbon fibers, polymer fibers, wood fibers, bamboo fibers, ceramic fibers, nanofibers, metal fibers, or similar or combinations thereof. In addition, the direction of the fibers may include multi-axial, unidirectional, biaxial, triaxial, or any other another suitable direction and/or combinations thereof. Further, the fiber content may vary depending on the stiffness required in the corresponding blade component, the region or location of the blade component in the rotor blade 16, and/or the desired weldability of the component.

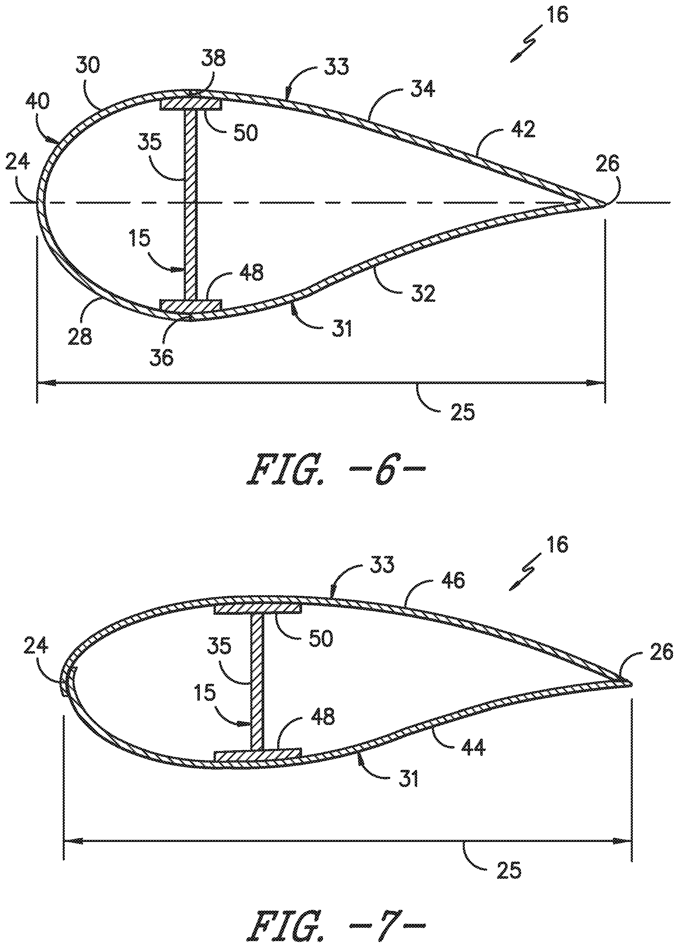

More specifically, as shown, the main blade structure 15 may include any one of or a combination of the following: a pre-formed blade root section 20, a pre-formed blade tip section 22, one or more one or more continuous spar caps 48, 50, 51, 53, one or more shear webs 35 (FIGS. 6-7), an additional structural component 52 (such as an additional spar cap) secured to the blade root section 20, and/or any other suitable structural component of the rotor blade 16. Further, the blade root section 20 is configured to be mounted or otherwise secured to the rotor 18 (FIG. 1). In addition, as shown in FIG. 2, the rotor blade 16 defines a span 23 that is equal to the total length between the blade root section 20 and the blade tip section 22. As shown in FIGS. 2 and 6, the rotor blade 16 also defines a chord 25 that is equal to the total length between a leading edge 24 of the rotor blade 16 and a trailing edge 26 of the rotor blade 16. As is generally understood, the chord 25 may generally vary in length with respect to the span 23 as the rotor blade 16 extends from the blade root section 20 to the blade tip section 22.

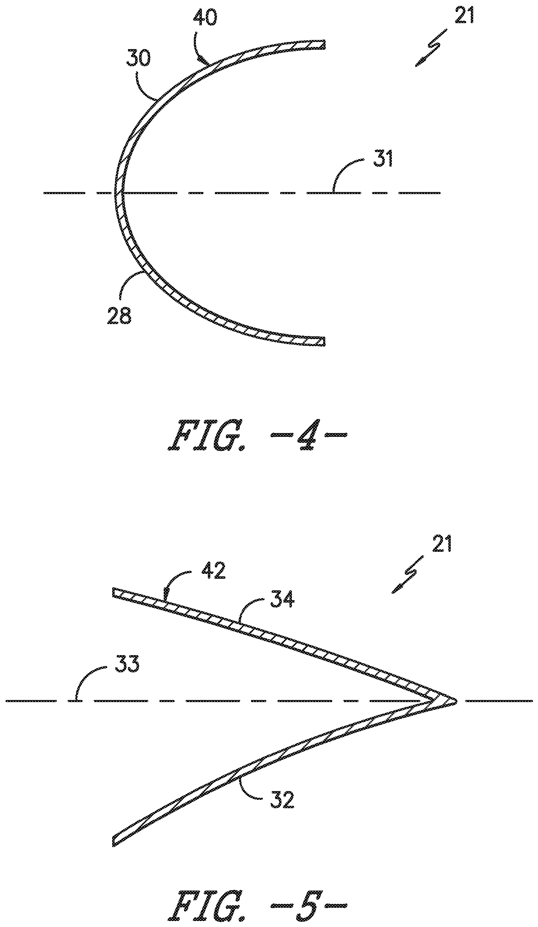

Referring particularly to FIGS. 2-4, any number of blade segments 21 having any suitable size and/or shape may be generally arranged between the blade root section 20 and the blade tip section 22 along a longitudinal axis 27 in a generally span-wise direction. Thus, the blade segments 21 generally serve as the outer casing/covering of the rotor blade 16 and may define a substantially aerodynamic profile that includes a pressure side surface 31 and a suction side surface 33 (FIGS. 3 and 4), such as by defining a symmetrical or cambered airfoil-shaped cross-section. In additional embodiments, it should be understood that the blade segment portion of the blade 16 may include any combination of the segments described herein and are not limited to the embodiment as depicted. In addition, the blade segments 21 may be constructed of any suitable materials, including **but** not limited to a thermoset material or a thermoplastic material optionally reinforced with one or more fiber materials. More specifically, in certain embodiments, the blade segments 21 may include pressure and/or suction side segments 44, 46 (FIGS. 2 and 3) and/or leading and/or trailing edge segments 40, 42 (FIGS. 2-6), or similar.

More specifically, as shown in FIG. 4, the leading edge segments 40 may have a forward pressure side surface 28 and a forward suction side surface 30. Similarly, as shown in FIG. 5, each of the trailing edge segments 42 may have an aft pressure side surface 32 and an aft suction side surface 34. Thus, the forward pressure side surface 28 of the leading edge segment 40 and the aft pressure side surface 32 of the trailing edge segment 42 generally define a pressure side surface of the rotor blade 16. Similarly, the forward suction side surface 30 of the leading edge segment 40 and the aft suction side surface 34 of the trailing edge segment 42 generally define a suction side surface of the rotor blade 16. In addition, as particularly shown in FIG. 6, the leading edge segment(s) 40 and the trailing edge segment(s) 42 may be joined at a pressure side seam 36 and a suction side seam 38. For example, the blade segments 40, 42 may be configured to overlap at the pressure side seam 36 and/or the suction side seam 38. Further, as shown in FIG. 2, adjacent blade segments 21 may be configured to overlap at a seam 54. Thus, where the blade segments 21 are constructed at least partially of a thermoplastic material, adjacent blade segments 21 can be welded together along the seams 36, 38, 54, which will be discussed in more detail herein. Alternatively, in certain embodiments, the various segments of the rotor blade 16 may be secured together via an adhesive (or mechanical fasteners) configured between the overlapping leading and trailing edge segments 40, 42 and/or the overlapping adjacent leading or trailing edge segments 40, 42.

In specific embodiments, as shown in FIGS. 2-3 and 6-7, the blade root section 20 may include one or more longitudinally extending spar caps 48, 50 infused therewith. Similarly, the blade tip section 22 may include one or more longitudinally extending spar caps 51, 53 infused therewith. More specifically, as shown, the spar caps 48, 50, 51, 53 may be configured to be engaged against opposing inner surfaces of the blade segments 21 of the rotor blade 16. Further, the blade root spar caps 48, 50 may be configured to align with the blade tip spar caps 51, 53. Thus, the spar caps 48, 50, 51, 53 may generally be designed to control the bending stresses and/or other loads acting on the rotor blade 16 in a generally span-wise direction (a direction parallel to the span 23 of the rotor blade 16) during operation of a wind turbine 10. In addition, the spar caps 48, 50, 51, 53 may be designed to withstand the span-wise compression occurring during operation of the wind turbine 10. Further, the spar cap(s) 48, 50, 51, 53 may be configured to extend from the blade root section 20 to the blade tip section 22 or a portion thereof. Thus, in certain embodiments, the blade root section 20 and the blade tip section 22 may be joined together via their respective spar caps 48, 50, 51, 53.

In addition, the spar caps 48, 50, 51, 53 may be constructed of any suitable materials, e.g. a thermoplastic or thermoset material or combinations thereof. Further, the spar caps 48, 50, 51, 53 may be pultruded from thermoplastic or thermoset resins. As used herein, the terms "pultruded," "pultrusions," or similar generally encompass reinforced materials (e.g. fibers or woven or braided strands) that are impregnated with a resin and pulled through a stationary die such that the resin cures or undergoes polymerization. As such, the process of manufacturing pultruded members is typically characterized by a continuous process of composite materials that produces composite parts having a constant cross-section. Thus, the pre-cured composite materials may include pultrusions constructed of reinforced thermoset or thermoplastic materials. Further, the spar caps 48, 50, 51, 53 may be formed of the same pre-cured composites or different pre-cured composites. In addition, the pultruded components may be produced from rovings, which generally encompass long and narrow bundles of fibers that are not combined until joined by a cured resin.

Referring to FIGS. 6-7, one or more shear webs 35 may be configured between the one or more spar caps 48, 50, 51, 53. More particularly, the shear web(s) 35 may be configured to increase the rigidity in the blade root section 20 and/or the blade tip section 22. Further, the shear web(s) 35 may be configured to close out the blade root section 20.

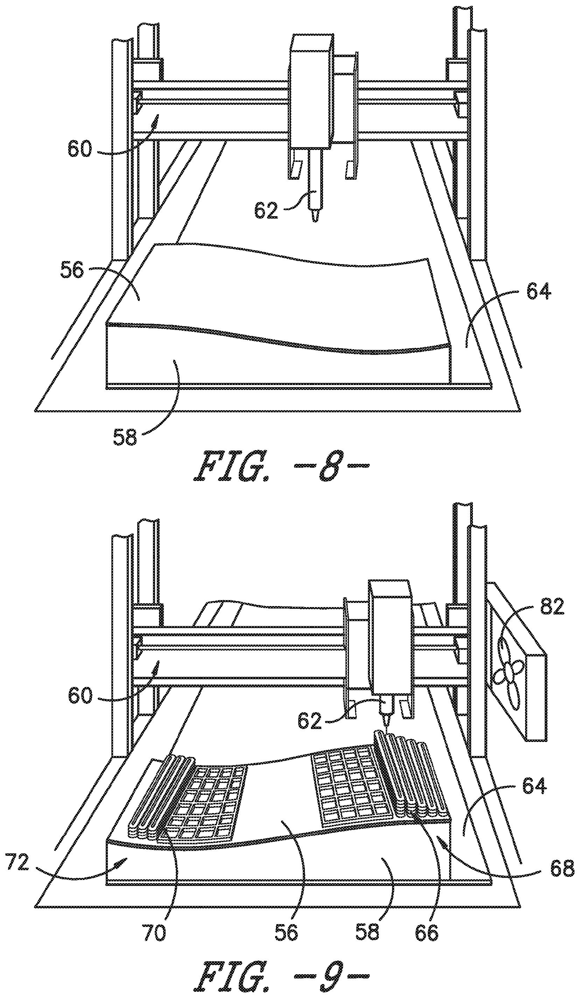

Referring now to FIGS. 8-14, the present disclosure is directed to methods for joining first and second blade components the rotor blade 16 together at a joint, e.g. via 3-D printing. For example, in one embodiment, the first and second blade components may include the pressure and/or suction side surfaces 31, 33 of the rotor blade 16, the shear web 35, the spar cap 48, 50, 51, 53 and/or combinations thereof. Thus, the methods of the present disclosure can be used in a variety of joint areas or connections, including but not limited to a spar cap/shear web connection, a spar cap/blade shell connection, and/or a blade shell/blade shell connection. More specifically, in certain embodiments, the blade shell/blade shell connection may include the trailing edge 26 and/or the leading edge 24 of the rotor blade 16. Thus, the illustrated embodiment of FIGS. 8-14 illustrates the process of forming first and second joint areas 68 and 72 between the pressure and/or suction side surfaces 31, 33 (i.e. at the trailing and leading edges 26, 24).

As used herein, 3-D printing is generally understood to encompass processes used to synthesize three-dimensional objects in which successive layers of material are formed under computer control to create the objects. As such, objects of almost any size and/or shape can be produced from digital model data. It should further be understood that the methods of the present disclosure are not limited to 3-D printing, but rather, may also encompass more than three degrees of freedom such that the printing techniques are not limited to printing stacked two-dimensional layers, but are also capable of printing curved shapes.

Referring particularly to FIG. 8, one embodiment of the method includes placing a mold 58 of the rotor blade 16 (or one of the blade segments 21) relative to a CNC device 60. More specifically, as shown in the illustrated embodiment, the method may include placing the mold 58 into a bed 64 of the CNC device 60. Alternatively, the method may include placing the mold 58 under the CNC device 60 or adjacent the CNC device 60.

Further, as shown, the method of the present disclosure further includes forming one or more fiber-reinforced outer skin surfaces 56 in the mold 58 of the rotor blade 16. In certain embodiments, the outer skin surface(s) 56 (which form the pressure and/or suction side surfaces 31, 33) may include one or more continuous, multi-axial (e.g. biaxial) fiber-reinforced thermoplastic or thermoset outer skins. Further, in particular embodiments, the method of forming the fiber-reinforced outer skin surfaces 56 may include at least one of injection molding, 3-D printing, 2-D pultrusion, 3-D pultrusion, thermoforming, vacuum forming, pressure forming, bladder forming, automated fiber deposition, automated fiber tape deposition, or vacuum infusion.

For example, in one embodiment, a thermoset material may be infused into the fiber material on the mold 58 to form the outer skin surface 56 using vacuum infusion. As such, the vacuum bag is removed after curing and the grid structures 66, 70 described herein can then be printed onto the inner surface of the outer skin surfaces 56. Alternatively, the vacuum bag may be left in place after curing. In such embodiments, the vacuum bag material can be chosen such that the material would not easily release from the cured thermoset fiber material. Such materials, for example, may include a thermoplastic material such as polymethyl methacrylate (PMMA) or polycarbonate film. Thus, the thermoplastic film that is left in place allows for bonding of thermoplastic grid structures 66 to the thermoset skins with the film in between.

In still further embodiments, the outer skin surface(s) 56 may be formed of a reinforced thermoplastic resin with the grid structures 66, 70 being formed of a thermoset-based resin with optional fiber reinforcement. In such embodiments, depending on the thermoset chemistry involved - the grid structures 66, 70 may be printed to the outer skin surfaces 56 while the surfaces 56 are still hot, warm, partially cooled, or completely cooled.

In addition, the outer skin surfaces 56 may be further treated to promote bonding between the outer skin surfaces s56 and the grid structure 66, 70. More specifically, in certain embodiments, the outer skin surfaces 56 may be treated using flame treating, plasma treating, chemical treating, chemical etching, mechanical abrading, embossing, elevating a temperature of at least areas to be printed on the outer skin surfaces 56, and/or any other suitable treatment method to promote said bonding. In additional embodiments, the method may include forming the outer skin surfaces 56 with more (or even less) matrix resin material on the inside surface to promote said bonding. In additional embodiments, the method may include varying the outer skin thickness and/or fiber content, as well as the fiber orientation.

In addition, as shown, the outer skin surface(s) 56 of the rotor blade 16 may be curved. In such embodiments, the method may include forming the curvature of the outer skin surfaces 56. Such forming may include providing one or more generally flat fiber-reinforced outer skin surfaces, forcing the outer skin surfaces 56 into a desired shape corresponding to a desired contour, and maintaining the outer skin surfaces 56 in the desired shape during printing and depositing. As such, the outer skin surfaces 56 generally retain their desired shape when the outer skin surfaces 56 and the grid structures 66, 70 printed thereto are released. In addition, the CNC device 60 may be adapted to include a tooling path that follows the contour of the rotor blade 16.

Thus, as shown in FIG. 9, one embodiment of the method includes printing and depositing the grid structure 66 directly to the inner surface of the outer skin surface(s) 56 via the CNC device 60. More specifically, as shown, the CNC device 60 is configured to print and deposit, at least, a first the grid structure 66 onto the inner surface of the first outer surface at the first joint area 68 of the rotor blade 16. In addition, as shown, the CNC device 60 may print and deposit a second grid structure 70 onto the inner surface of the first outer surface 56 at a different, second joint area 72.

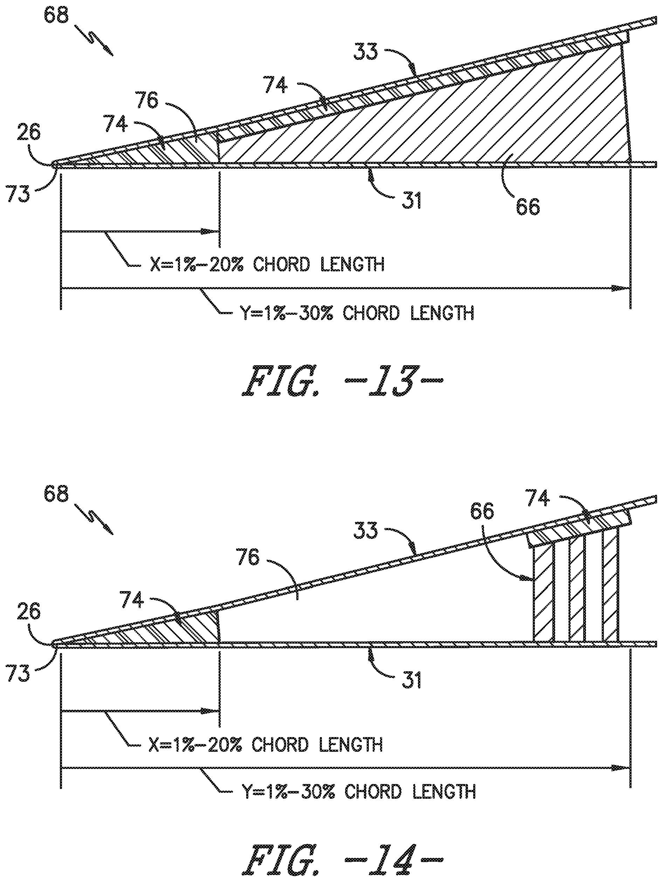

It should be understood that any suitable shape of grid structures 66, 70 described herein can be printed and deposited as desired. As such, in certain embodiments, the grid structures 66, 70 may bond to the outer skin(s) 56 as the grid structures 66, 70 are being deposited, which reduces the amount of adhesive and/or curing time needed for the first and second joint areas 68, 72, respectively. For example, as shown in FIGS. 13 and 14, various embodiments of different shapes and sizes of the grid structure 66 at the trailing edge 26 are illustrated. More specifically, as shown in the illustrated embodiment, the grid structure 66 may have a size ranging from about 10 millimeters (mm) to about 300 mm. It should be understood, however, that the size of the grid structures 66, 70 may depend on the size and shape of the rotor blade 16. Further, as shown in FIG. 13, the grid structure 66 may extend from the adhesive 74 at the trailing edge 26 up to, e.g. 30% chord length. Alternatively, as shown in FIG. 14, the grid structure 66 may be spaced apart from the adhesive 74 at the trailing edge 26 so as to minimize the weight at the joint area 68.

For example, in one embodiment, the CNC device 60 is configured to print and deposit the grid structures 66, 70 after the formed skin surface 56 reaches a desired state that enables bonding of the grid structures 66, 70 thereto, i.e. based on one or more parameters of temperature, time, and/or hardness. Therefore, in certain embodiments, wherein the skin surfaces 56 and grid structures 66, 70 are formed of a thermoplastic matrix, the CNC device 60 may immediately print the grid structures 66, 70 thereto as the forming temperature of the skin surface(s) 56 and the desired printing temperature to enable thermoplastic welding/bonding can be the same).

More specifically, in particular embodiments, before the skin surface(s) 56 have cooled from forming, (i.e. while the skins are still hot or warm), the CNC device 60 is configured to print and deposit the grid structures 66, 70 onto the inner surface of the outer skin surfaces 56. For example, in one embodiment, the CNC device 60 is configured to print and deposit the grid structures 66, 70 onto the inner surface of the outer skin surfaces 56 before the surfaces 56 have completely cooled. In addition, in another embodiment, the CNC device 60 is configured to print and deposit the grid structures 66, 70 onto the inner surface of the outer skin surfaces 56 when the surfaces 56 have partially cooled. Thus, suitable materials for the grid structures 66, 70 and the outer skin surfaces 56 can be chosen such that the grid structures 66, 70 bonds to the outer skin surfaces 56 during deposition. Accordingly, the grid structures 66, 70 described herein may be printed using the same materials or different materials.

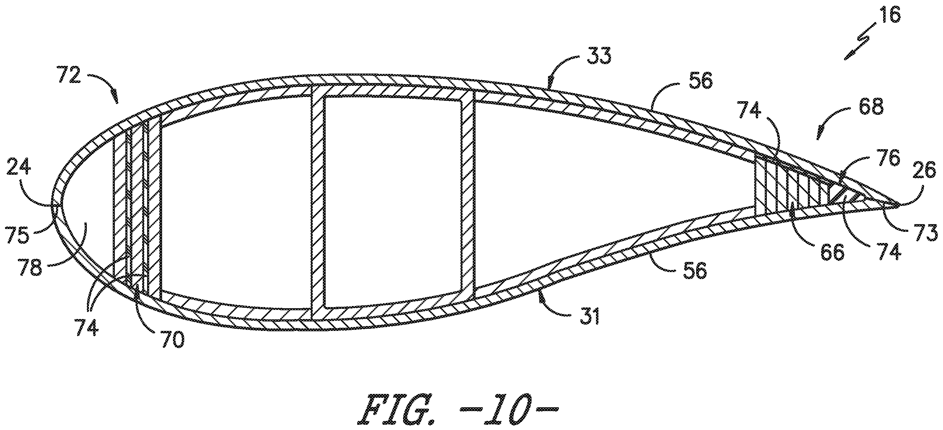

It should be understood that the grid structures 66, 70 of the present disclosure may include varying shapes and/or designs (e.g. materials, width, height, thickness, shapes, etc., or combinations thereof). As such, the grid structures 66, 70 may define any suitable shape so as to form any suitable structure that can be used at any joint connection within the rotor blade 16 such that adhesives can be reduced in such joints. Thus, the CNC device 60 can be designed having one or more extruders 62 that generate any suitable thickness or width so as to disperse a desired amount of resin material to create the grid structures 66, 70 with varying heights and/or thicknesses. For example, many rotor blade joints include tight angles and/or tapered cross-sections that are conventionally filled with adhesives. Thus, as shown particularly in FIG. 10, the grid structure(s) 66, 70 of the present disclosure can be printed to contact both of the inner surfaces of the pressure and/or suction side surfaces 31, 33. Thus, in such embodiments, the grid structure(s) 66, 70 may include a tapered chord-wise cross-section.

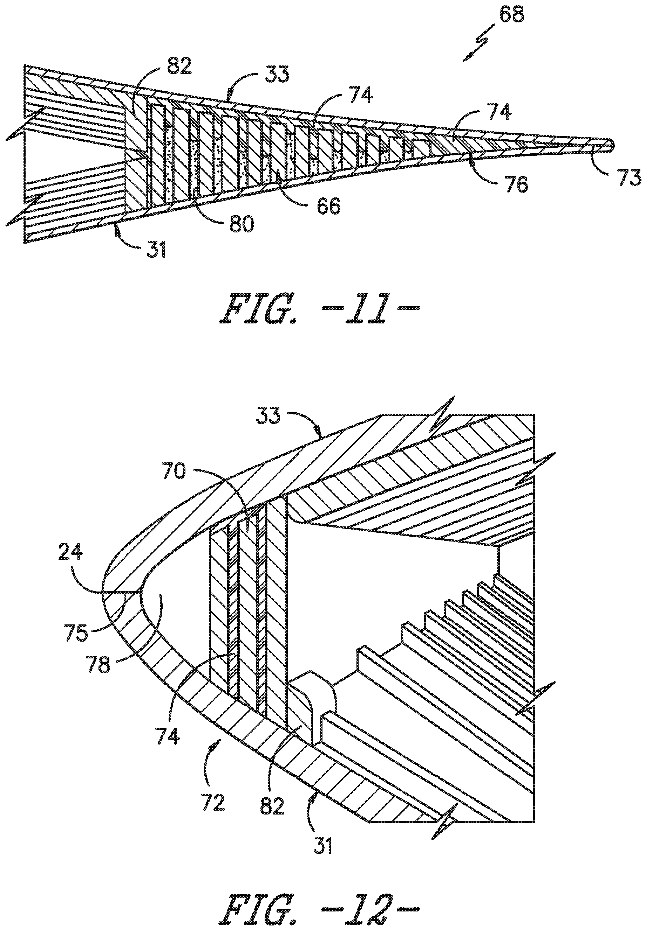

In yet another embodiment, the CNC device 60 may also print and deposit one or more alignment structures 82 into the grid structure(s) 66, 70. For example, as shown in FIGS. 11 and 12, the grid structure(s) 66, 70 may include may include an alignment structure 82 that is printed along with the grid structure(s) 66, 70 for assisting in aligning adjacent rotor blade components (such as printed reinforcement grids of the pressure and/or suction side surfaces 31, 33).

When the grid structures 66, 70 are printed using extruded thermoplastics with tighter gaps, the structures 66, 70 can retain heat as the printed structure gets taller. Additional heat can be further retained as the shape of many rotor blade joints are tapered or angled, thereby requiring grid structures 66, 70 within a tapered or angled cross-section. As such, the printed layer times get shorter as the part is built. As a result, taller structures and those portions with shorter layer times (i.e. the time it takes to print a layer before starting the next layer) can begin to sag and puddle as there is not enough cooling time to sufficiently solidify the previous layer. Thus, the method of the present disclosure is configured to slow down the print speeds as needed, alter the formulation of the resin system to use a faster solidifying resin matrix (e.g. a more semi crystalline/less amorphous formulation), and/or selectively apply cooling air to the grid structures 66, 70 during printing and depositing. For example, in one embodiment, as shown in FIG. 9, the CNC device 60 may include one or more cooling fans 82 or cooling air nozzles that selectively turn on as needed to cool down the grid structures 66, 70.

In addition to additive manufacturing, the grid structures 66, 70 of the present disclosure may also be formed, at least in part, of one or more pre-fabricated sections of a honeycomb material. For example, in one embodiment, honeycomb prefabricated material can be CNC machined to fit the desired shape needed at the joint and adhesive can be applied to both inner surfaces of the outer skin surfaces 56 to bond the honeycomb material in place. In another embodiment, a thermoplastic honeycomb material may be crushed into shape under pressure and/or heated along with adhesives.

After the grid structures 66, 70 are printed on the outer skin surface 56, as shown in FIGS. 10-14, the method may include providing an adhesive 74 at the first joint area 68 and/or the second joint area 72, e.g. to at least partially fill the grid structures 66, 70. Thus, the method also includes placing the second outer surface atop the first outer surface and the printed grid structures 66, 70 and securing the first and second outer skin surfaces 31, 33 together at first and second joints 73, 75, respectively, via the adhesive 74. Thus, as shown FIG. 10, the first joint 73 contains the trailing edge 26 of the rotor blade 16, where the pressure and suction side surfaces 31, 33 of the rotor blade 16 are secured together. Similarly, as shown, the second joint 75 contains the leading edge 24 of the rotor blade 16, also where the pressure and suction side surfaces 31, 33 of the rotor blade 16 are secured together.

In such embodiments, as shown in FIGS. 11, 13, and 14, the first grid structure 66 may be spaced apart from the trailing edge 26 of the rotor blade 16 to provide a first gap 76. More specifically, as shown in FIGS. 13 and 14, the first gap 76 may extend from about 1% to about 20% as an example of the chord-wise length of the rotor blade 16. It should be understood that the first gap 76 may include any suitable chord-wise length that is sufficient for adhesion of the pressure and suction side surfaces 31, 33. In addition, as shown in FIG. 12, the second grid structure 70 may also be spaced apart from the leading edge 24 of the rotor blade 16 to provide a second gap 78. Similarly, the second gap 78 may extend from about 1% to about 20% as an example of the chord-wise length of the rotor blade 16. Further, it should be understood that the second gap 78 may include any suitable chord-wise length that is sufficient for adhesion of the pressure and suction side surfaces 31, 33.

Thus, the method may also include filling, at least in part, the first and/or second gaps 76, 78 with the adhesive 74. For example, as shown in FIGS. 10 and 11, the first gap 76 may be completely filled with adhesive 74. Alternatively, as shown in FIG. 13, only a portion of the first gap 76 may be filled with adhesive 74. In addition, as shown in FIGS. 10 and 12, the second gap 78 may be left primarily free of adhesive 74. Alternatively, the second gap 78 may be partially or completely filled with adhesive 74.

In another embodiment, the method may include forming at least a portion of the grid structure 62 of a foaming agent 80. For example, as shown in FIG. 11, a portion of the grid structure 66 at the first joint area 68 is formed of the foaming agent 80 to further reduce the weight of the structure 62 and therefore the overall rotor blade 16.

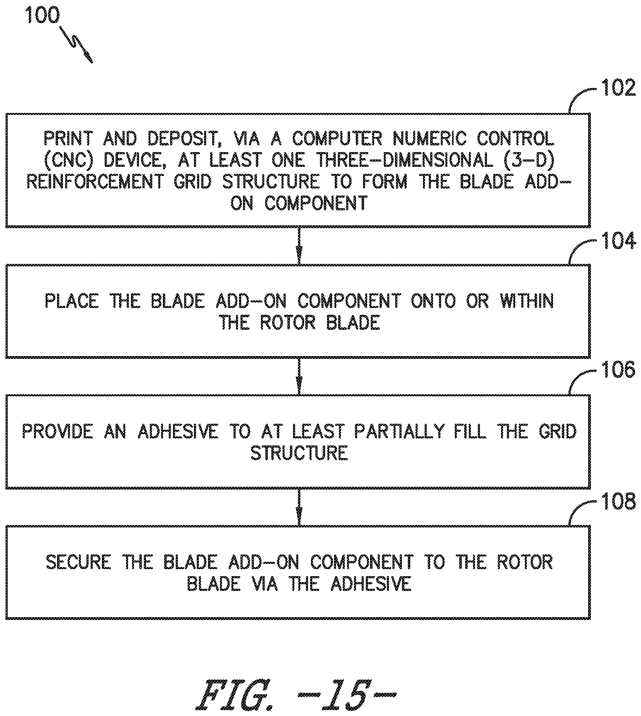

The methods of the present disclosure can also be useful for certain types of blade add-on components, where certain aerodynamic features are desired to be added to the exterior surface of a rotor blade either after production and/or to existing rotor blades in the field. Thus, referring now to FIG. 15, a flow diagram of one embodiment of a method 100 for securing a blade add-on component to a rotor blade 16 is illustrated. As shown at 102, the method 100 includes printing and depositing, via the CNC device 60, at least one three-dimensional (3-D) grid structure to form the blade add-on component. As shown at 104, the method 100 includes placing the blade add-on component onto or within the rotor blade. As shown at 106, the method 100 includes providing an adhesive to at least partially fill the grid structure. As shown at 108, the method 100 includes securing the blade add-on component to the rotor blade via the adhesive.

Examples of the blade add-on component may include flatback airfoil corner sections, tip extensions (i.e. a grid structure used to fill thin sections between a sock tip and the rotor blade 16, and allow for bonding using this grid technique), or a reinforcement structure for a leading edge or a trailing edge.

This written description uses examples to disclose the invention, including the best mode, and to enable any person skilled in the art to practice the invention, including making and using any devices or systems and performing any incorporated methods. The patentable scope of the invention is defined by the claims.

## Claims

1. A method (100) for joining a first blade component and a second blade component of a rotor blade (16) together, the method (100) comprising:
printing and depositing, via a computer numeric control (CNC) device (60), at least one three-dimensional (3-D) grid structure (66, 70) at a first joint area (68) of the rotor blade (16), the first joint area (68) containing the first blade component interfacing with the second blade component;
providing an adhesive (74) at the first joint area (68) and contacting at least a portion of the grid structure (66, 70), wherein the first joint area (68) comprises at least one of a spar cap/shear web connection, a spar cap/blade shell connection, or a blade shell/blade shell connection, the blade shell/blade shell connection comprising at least one of a trailing edge of the rotor blade (16) or a leading edge of the rotor blade (16);
securing the first blade component and the second blade component together at the first joint area (68) via the adhesive (74); the method further comprising
printing and depositing, via the CNC device (60), a first grid structure (66, 70) onto an inner surface of a first outer surface of the rotor blade at the first joint area (68) and spaced apart from the trailing edge of the rotor blade (16) to provide a first gap, and
printing and depositing, via the CNC device (60) a second grid structure (66, 70) onto the inner surface of the first outer surface at a different, second joint area (72) and spaced apart from the leading edge of the rotor blade (16) to provide a second gap; and
filling, at least in part, at least one of the first gap or the second gap with the adhesive (74).

2. The method (100) of claim 1, wherein the adhesive (74) at least partially fills the grid structure (66, 70).

3. The method (100) of claims 1 or 2, wherein the first and second blade components, respectively, further comprise at least one of first and second outer surfaces of the rotor blade (16), a shear web, or a spar cap.

4. The method (100) of claim 3, further comprising:
placing the first outer surface into a mold of the rotor blade (16);
printing and depositing, via the CNC device (60), the at least one grid structure (66, 70) onto an inner surface of the first outer surface at the first joint area (68), the grid structure (66, 70) bonding to the first outer surface as the grid structure (66, 70) is being deposited;
placing the second outer surface atop the first outer surface; and,
securing the first and second outer surfaces together via the adhesive (74).

5. The method (100) of any of the preceding claims, further comprising forming at least a portion of the grid structure (66, 70) of a foaming agent.

6. The method (100) of any of the preceding claims, further comprising selectively applying cooling air to the grid structure (66, 70) during printing and depositing.

7. The method (100) of any of the preceding claims, further comprising printing and depositing, via the CNC device (60), one or more alignment structures into the at least one grid structure (66, 70).

8. The method (100) of any of the preceding claims, wherein the at least one grid structure (66, 70) comprises a tapered chord-wise cross-section that contacts the inner surface of the first outer surface and an inner surface of the second outer surface.

9. A joint area of a rotor blade (16) of a wind turbine (10), the joint area comprising:
a first blade component;
a second blade component interfacing with the first blade component at a joint;
at least one three-dimensional (3-D) grid structure (66, 70) positioned between the first and second blade components adjacent to the joint; and,
an adhesive (74) provided between the grid structure (66, 70) and the first and second blade components, wherein the joint area comprises at least one of a spar cap/shear web connection, a spar cap/blade shell connection, or a blade shell/blade shell connection, the blade shell/blade shell connection comprising at least one of a trailing edge of the rotor blade (16) or a leading edge of the rotor blade (16).

10. The joint area of claim 9, wherein the adhesive (74) at least partially fills the grid structure (66, 70).

## Patentansprüche

1. Verfahren (100) zum Verbinden einer ersten Blattkomponente und einer zweiten Blattkomponente eines Rotorblattes (16) miteinander, wobei das Verfahren (100) Folgendes umfasst:
Drucken und Abscheiden mindestens einer dreidimensionalen (3D-) Gitterstruktur (66, 70) auf einem ersten Nahtstellenbereich (68) des Rotorblattes (16) mittels einer Vorrichtung (60) zur rechnergestützten numerischen Steuerung (CNC), wobei der erste Nahtstellenbereich (68) die erste Blattkomponente enthält, die an die zweite Blattkomponente anschließt;
Bereitstellen eines Haftstoffs (74) an dem ersten Nahtstellenbereich (68) und in Kontakt mit mindestens einem Abschnitt der Gitterstruktur (66, 70), wobei der erste Nahtstellenbereich (68) eine Holmkappe/Schersteg-Verbindung und/oder eine Holmkappe/Blattschale-Verbindung und/oder eine Blattschale/Blattschale-Verbindung umfasst, wobei die Blattschale/Blattschale-Verbindung eine Hinterkante des Rotorblattes (16) und/oder eine Vorderkante des Rotorblattes (16) umfasst;
Befestigen der ersten Blattkomponente und der zweiten Blattkomponente aneinander an dem ersten Nahtstellenbereich (68) mittels des Haftstoffs (74); wobei das Verfahren ferner Folgendes umfasst:
Drucken und Abscheiden einer ersten Gitterstruktur (66, 70) mittels der CNC-Vorrichtung (60) auf einer Innenfläche einer ersten Außenfläche des Rotorblattes an dem ersten Nahtstellenbereich (68) und beabstandet von der Hinterkante des Rotorblattes (16), um einen ersten Spalt bereitzustellen; und
Drucken und Abscheiden einer zweiten Gitterstruktur (66, 70) mittels der CNC-Vorrichtung (60) auf der Innenfläche der ersten Außenfläche an einem anderen, zweiten Nahtstellenbereich (72) und beabstandet von der Vorderkante des Rotorblattes (16), um einen zweiten Spalt bereitzustellen; und
zumindest teilweises Füllen des ersten Spalts und/oder des zweiten Spalts mit dem Haftstoff (74).

2. Verfahren (100) nach Anspruch 1, wobei der Haftstoff (74) die Gitterstruktur (66, 70) zumindest teilweise füllt.

3. Verfahren (100) nach Anspruch 1 oder 2, wobei die erste beziehungsweise die zweite Blattkomponente ferner eine erste und eine zweite Außenfläche des Rotorblattes (16) und/oder einen Schersteg und/oder eine Holmkappe umfassen.

4. Verfahren (100) nach Anspruch 3, ferner umfassend:
Platzieren der ersten Außenfläche in einer Form des Rotorblattes (16);
Drucken und Abscheiden der mindestens einen Gitterstruktur (66, 70) auf einer Innenfläche der ersten Außenfläche an dem ersten Nahtstellenbereich (68) mittels der CNC-Vorrichtung (60), wobei die Gitterstruktur (66, 70) an die erste Außenfläche bindet, wenn die Gitterstruktur (66, 70) abgeschieden wird;
Platzieren der zweiten Außenfläche oben auf der ersten Außenfläche; und
Sichern der ersten und der zweiten Außenfläche aneinander mittels des Haftstoffs (74).

5. Verfahren (100) nach einem der vorhergehenden Ansprüche, ferner umfassend das Bilden mindestens eines Abschnitts der Gitterstruktur (66, 70) aus einem Aufschäummittel.

6. Verfahren (100) nach einem der vorhergehenden Ansprüche, ferner umfassend das selektive Anwenden von Kühlungsluft auf die Gitterstruktur (66, 70) während des Druckens und Abscheidens.

7. Verfahren (100) nach einem der vorhergehenden Ansprüche, ferner umfassend das Drucken und Abscheiden einer oder mehrerer Ausrichtungsstrukturen in die mindestens eine Gitterstruktur (66, 70) mittels der CNC-Vorrichtung (60).

8. Verfahren (100) nach einem der vorhergehenden Ansprüche, wobei die mindestens eine Gitterstruktur (66, 70) in Richtung der Profilsehnen einen sich verjüngenden Querschnitt umfasst, der mit der Innenfläche der ersten Außenfläche und einer Innenfläche der zweiten Außenfläche in Kontakt steht.

9. Nahtstellenbereich eines Rotorblattes (16) einer Windkraftanlage (10), wobei der Nahtstellenbereich Folgendes umfasst:
eine erste Blattkomponente;
eine zweite Blattkomponente, die an einer Nahtstelle an die erste Blattkomponente anschließt;
mindestens eine dreidimensionale (3D-) Gitterstruktur (66, 70), die zwischen der ersten und der zweiten Blattkomponente angrenzend an der Nahtstelle positioniert ist; und
einen Haftstoff (74), der zwischen der Gitterstruktur (66, 70) und der ersten und der zweiten Blattkomponente bereitgestellt ist, wobei der Nahtstellenbereich eine Holmkappe/Schersteg-Verbindung und/oder eine Holmkappe/Blattschale-Verbindung und/oder eine Blattschale/Blattschale-Verbindung umfasst, wobei die Blattschale/Blattschale-Verbindung eine Hinterkante des Rotorblattes (16) und/oder eine Vorderkante des Rotorblattes (16) umfasst.

10. Nahtstellenbereich nach Anspruch 9, wobei der Haftstoff (74) die Gitterstruktur (66, 70) zumindest teilweise füllt.

## Revendications

1. Procédé (100) servant à relier ensemble un premier composant de pale et un deuxième composant de pale d'une pale de rotor (16), le procédé (100) comportant les étapes consistant à :
imprimer et déposer, par le biais d'un dispositif à commande numérique par ordinateur (CNC) (60), au moins une structure formant grille tridimensionnelle (3D) (66, 70) au niveau d'une première zone formant joint (68) de la pale de rotor (16), la première zone formant joint (68) contenant le premier composant de pale qui est en interface avec le deuxième composant de pale ;
fournir un adhésif (74) au niveau de la première zone formant joint (68) et en contact avec au moins une partie de la structure formant grille (66, 70), dans lequel la première zone formant joint (68) comporte au moins l'une parmi une liaison entre une semelle de longeron et une âme de cisaillement, une liaison entre une semelle de longeron et une coque de pale, ou une liaison entre une coque de pale et une coque de pale, la liaison entre une coque de pale et une coque de pale comportant au moins l'un parmi un bord de fuite de la pale de rotor (16) ou un bord d'attaque de la pale de rotor (16) ;
assujettir le premier composant de pale et le deuxième composant de pale ensemble au niveau de la première zone formant joint (68) par le biais de l'adhésif (74) ; le procédé comportant par ailleurs les étapes consistant à :
imprimer et déposer, par le biais du dispositif CNC (60), une première structure formant grille (66, 70) sur une surface intérieure d'une première surface extérieure de la pale de rotor au niveau de la première zone formant joint (68) et espacée par rapport au bord de fuite de la pale de rotor (16) à des fins de mise en œuvre d'un premier espace, et
imprimer et déposer, par le biais du dispositif CNC (60), une deuxième structure formant grille (66, 70) sur la surface intérieure de la première surface extérieure au niveau d'une différente deuxième zone formant joint (72) et espacée par rapport au bord d'attaque de la pale de rotor (16) à des fins de mise en œuvre d'un deuxième espace ; et
remplir, au moins en partie, au moins l'un parmi le premier espace et le deuxième espace au moyen de l'adhésif (74).

2. Procédé (100) selon la revendication 1, dans lequel l'adhésif (74) remplit au moins partiellement la structure formant grille (66, 70).

3. Procédé (100) selon la revendication 1 ou la revendication 2, dans lequel les premier et deuxième composants de pale, respectivement, comportent par ailleurs au moins l'une parmi les première et deuxième surfaces extérieures de la pale de rotor (16), une âme de cisaillement, ou une semelle de longeron.

4. Procédé (100) selon la revendication 3, comportant par ailleurs les étapes consistant à :
placer la première surface extérieure dans un moule de la pale de rotor (16) ;
imprimer et déposer, par le biais du dispositif CNC (60), ladite au moins une structure formant grille (66, 70) sur une surface intérieure de la première surface extérieure au niveau de la première zone formant joint (68), la structure formant grille (66, 70) se liant à la première surface extérieure au fur et à mesure que la structure formant grille (66, 70) est déposée ;
placer la deuxième surface extérieure par-dessus la première surface extérieure ; et
assujettir les première et deuxième surfaces extérieures ensemble par le biais de l'adhésif (74).

5. Procédé (100) selon l'une quelconque des revendications précédentes, comportant par ailleurs l'étape consistant à former au moins une partie de la structure formant grille (66, 70) à partir d'un agent moussant.

6. Procédé (100) selon l'une quelconque des revendications précédentes, comportant par ailleurs l'étape consistant à appliquer de manière sélective de l'air de refroidissement sur la structure formant grille (66, 70) lors des étapes consistant à imprimer et à déposer.

7. Procédé (100) selon l'une quelconque des revendications précédentes, comportant par ailleurs les étapes consistant à imprimer et à déposer, par le biais du dispositif CNC (60), une ou plusieurs structures d'alignement dans ladite au moins une structure formant grille (66, 70).

8. Procédé (100) selon l'une quelconque des revendications précédentes, dans lequel ladite au moins une structure formant grille (66, 70) comporte une section transversale conique dans le sens de la corde qui est en contact avec la surface intérieure de la première surface extérieure et une surface intérieure de la deuxième surface extérieure.

9. Zone formant joint d'une pale de rotor (16) d'une éolienne (10), la zone formant joint comportant :
un premier composant de pale ;
un deuxième composant de pale en interface avec le premier composant de pale au niveau d'un joint ;
au moins une structure formant grille tridimensionnelle (3D) (66, 70) positionnée entre les premier et deuxième composants de pale adjacents au joint ; et,
un adhésif (74) fourni entre la structure formant grille (66, 70) et les premier et deuxième composants de pale, dans laquelle la zone formant joint comporte au moins l'une parmi une liaison entre une semelle de longeron et une âme de cisaillement, une liaison entre une semelle de longeron et une coque de pale, ou une liaison entre une coque de pale et une coque de pale, la liaison entre une coque de pale et une coque de pale comportant au moins l'un parmi un bord de fuite de la pale de rotor (16) ou un bord d'attaque de la pale de rotor (16).

10. Zone formant joint selon la revendication 9, dans laquelle l'adhésif (74) remplit au moins partiellement la structure formant grille (66, 70).
